# EUROPÄISCHE PATENTANMELDUNG

(11) **EP 1 052 801 A2**
(43) Veröffentlichungstag der Anmeldung: **15.11.2000**
(21) Anmeldenummer: 00106969.9
(22) Anmeldetag: 01.04.2000
(51) Int. Cl.: H04L 9/06

(54) **Verfahren zur Implementierung kryptographischer Algorithmen**

(30) Priorität: 10.05.1999 DE 19921633
(71) Anmelder: Deutsche Telekom AG, 53113 Bonn (DE)
(72) Erfinder: Schaffelhofer, Ralf, 64285 Darmstadt (DE); Saar, Eva, 64293 Darmstadt (DE)

(57) **Zusammenfassung**

Die Erfindung betrifft ein Verfahren zur Implementierung kryptographischer Algorithmen, mit welchem die Sicherheit der die Verschlüsselung durchführenden Komponente eines kryptographischen erhöht wird. Ihr liegt die Aufgabe zugrunde, ein Verfahren anzugeben, mit welchem die Sicherheit einer solchen Komponente mit geringem Aufwand gegenüber einem Angriff erhöht wird, bei dem in der Art der DPA an der Komponente ermittelte physikalische Parameter in die Kryptoanalyse einbezogen werden.
Die Aufgabe wird gelöst, indem mit dem Algorithmus Funktionen implementiert werden, welche beim Ablauf Algorithmus die Durchführung zusätzlicher Operationen bewirken, durch die sich der zeitliche Ablauf des Algorithmus jeweils zufalls- oder pseudo-zufallsgesteuert verändert, das Verschlüsselungsergebnis aber nicht beeinflußt. Erfindungsgemäß wird dies erreicht, indem es sich bei den zusätzlichen Operationen um Operationen ohne Ergebnis handelt oder indem aus der Durchführung zusätzlicher mathematischer Operationen resultierende Ergebnisse nicht weiterverarbeitet werden, sich im Hinblick auf das Verschlüsselungsergebnis aufheben oder nur die Basis zur Festlegung der Anzahl und/oder Reihenfolge anderer Operationen oder der zeitlichen Reihenfolge von ohne Beeinflussung des Verschlüsselungsergebnisses vertauschbaren Teilschritten des Algorithmus bilden.

## Beschreibung

Die Erfindung betrifft ein Verfahren zur Implementierung kryptographischer Algorithmen, mit welchem die Sicherheit der die Verschlüsselung durchführenden Komponente eines kryptographischen Systems gegenüber einem kryptoanalytischen Angriff erhöht wird, bei dem die Ermittlung bei der Durchführung des Algorithmus verwendeter Schlüssel unter Einbeziehung an der Komponente während der Durchführung des Algorithmus ermittelter physikalischer Parameter erfolgt. Dabei dient das dargestellte Verfahren vorzugsweise dazu, die Sicherheit einer die Verschlüsselung auf elektronischem oder opto-elektronischem Wege durchführenden Komponente - beispielsweise einer Chipkarte - gegenüber einem Angriff in der Art einer Differential Power Analysis (DPA) zu erhöhen.
Im Zuge der Entwicklung zur Informationsgesellschaft wachsen die Bestände elektronisch gespeicherter Informationen ständig an. Damit verbunden ist außerdem ein immenser Anstieg des Austausches sensibler Informationen in Form digitaler Datenströme. Dem Schutz der Daten, insbesondere ihrer Vertraulichkeit, Authentizität und Integrität, kommt daher eine überragende Bedeutung zu.
So werden in Systemen, welche sich im alltäglichen Einsatz befinden, zunehmend Daten gespeichert und verarbeitet, auf die jeweils nur dafür autorisierte Nutzer bzw. deren Systeme Zugriff in einem vorgegebenen Umfang haben dürfen. Beispielhaft hierfür sei auf die zunehmende Bedeutung und die Verbreitung von Chipkarten verwiesen, die unter anderem im Geldverkehr oder im Zusammenhang mit öffentlichen Fernsprechern, dem Mobilfunk oder dem Pay-TV in den letzten Jahren eine weite Verbreitung gefünden haben.
Den dargestellten Sicherheitsanforderungen wird vor allem durch eine Verschlüsselung geheimzuhaltender Daten begegnet. Dabei hat die Verschlüsselung, auch wenn deren Bedeutung insbesondere im Privatsektor erst in jüngster Zeit stark zugenommen hat, bereits eine lange Historie. So wurde beispielsweise der häufig verwendete DES-Algorithmus bereits Mitte der siebziger Jahre entwickelt. Eine grundlegende Darstellung dieses Algorithmus findet sich unter anderem in Schneier "Angewandte Kryptrographie" Addison-Wesley Publishing Company - 1996. Obwohl der Algorithmus, wie sein verbreiteter Einsatz zeigt, bislang als vergleichsweise sicher galt, wurde stets versucht, ihn durch unterschiedliche Methoden zu brechen.
Bei dem Versuch den DES oder andere weit verbreitete Algorithmen zu brechen, standen bisher kryptoanalytische Verfahren auf der Basis mathematischer Methoden im Vordergrund. Vielfach wurde auch einfach versucht, mit Rechnern entsprechender Leistungsfähigkeit alle in dem durch den Algorithmus festgelegten Schlüsselraum möglichen Schlüssel durchzuprobieren. Aufgrund der Größe des Schlüsselraums sind derartige Versuche jedoch selbst mit leistungsstarken Rechnern relativ aufwendig. Neuere Versuche zum Brechen von Verschlüsselungsalgorithmen beziehen daher die Beobachtung bestimmter physikalischer Parameter beim Ablauf des Algorithmus in die Kryptoanalyse mit ein.
Beispielsweise ist ein als "Differential Power Analysis" (DPA) bezeichneter Angriff bekannt geworden, über welchen näheres unter der Internet-Adresse www.cryptography.com/dpa ausgeführt wird. Im Kern beruht die unter anderern auch auf den DES-Algorithmus anwendbare Analyse darauf, den Stromverbrauch des die Verschlüsselung durchführenden Systems beim Ablauf des Algorithmus oder entsprechend dem Stromfluß sich verändernde elektrische Felder in einer großen Anzahl von Messungen innerhalb eines bestimmten Zeitintervalls zu erfassen bzw. zu detektieren, und hieraus durch eine geeignete Gewichtung vieler aufgenommener Meßkurven die verwendeten Schlüssel zu ermitteln. Die Messung des Stromverbrauchs kann dabei beispielsweise bei einer Chipkarte an den die Schnittstelle zwischen der Chipkarte und einem Host darstellenden Kontakten auf der Chipkarte erfolgen.
Die vorstehenden Erläuterungen zeigen, daß im Hinblick auf diese Attacke, insbesondere der Art und Weise der Implementierung der Algorithmen eine besondere Bedeutung zukommt. Dabei kommt es darauf an, die Algorithmen so zu implementieren, daß die Messung bestimmter physikalischer Parameter entweder erschwert wird oder aber, da der Angreifer in der Regel eine Vielzahl von Messungen vornehmen muß, um zu verwertbaren Ergebnissen zu gelangen, die Reproduzierbarkeit der Meßergebnisse bei grundsätzlich dennoch jeweils gleich ablaufenden Verschlüsselungsvorgängen deutlich zu verringern.

Aufgabe der Erfindung ist es, ein Verfahren anzugeben, mit welchem die Sicherheit einer der Verschlüsselung dienenden Komponente eines kryptographischen Systems mit geringem Aufwand gegenüber einem Angriff erhöht wird, bei dem in der Art der DPA an der Komponente ermittelte physikalische Parameter in die Kryptoanalyse einbezogen werden.

Die Aufgabe wird gelöst durch ein Verfahren mit den Merkmalen des Hauptanspruchs. Vorteilhafte Ausbildungen des erfindungsgemäßen Verfahrens sind durch die Unteransprüche gegeben.

Gemäß der Erfindung ist das Verfahren so ausgestaltet, daß mit dem Algorithmus Funktionen implementiert werden, welche beim Ablauf des Algorithmus die Durchführung zusätzlicher Operationen bewirken, die den zeitlichen Ablauf des Algorithmus jeweils zufalls- oder pseudo-zufallsgesteuert verändern, aber das Verschlüsselungsergebnis nicht beeinflussen. Dies wird erfindungsgemäß erreicht, indem es sich bei den zusätzlichen Operationen um Operationen ohne Ergebnis handelt oder indem aus der Durchführung zusätzlicher mathematischer Operationen resultierende Ergebnisse nicht weiterverarbeitet bzw. unmittelbar verworfen werden, sich gegeneinander aufheben oder nur die Basis zur Festlegung der Anzahl und/oder Reihenfolge anderer Operationen oder der zeitlichen Reihenfolge von ohne Beeinflussung des Verschlüsselungsergebnisses vertauschbaren Teilschritten des Algorithmus bilden. Als Operation ohne Ergebnis kann beispielsweise das sogenannte NOP eines Mikroprozessors angesehen werden. NOP steht dabei zwar in der Übersetzung für 'keine Operation', bedeutet aber lediglich, daß zwar prozessorintern Operationen erfolgen (Der Prozessor bleibt für eine in seiner Spezifikation vorgegebene Anzahl von Takten in einem Wartezustand), sich diese aber in bezug auf die vom Prozessor im Programmablauf verarbeiteten Daten nicht auswirken. Bei den mathematischen Operationen kann es sich um Operationen der allgemeinen Algebra oder um solche der Boolschen Algebra handeln.
Durch das erfindungsgemäße Verfahren werden also die beim Ablauf des Verschlüsselungsalgorithmus von der verschlüsselnden Komponente durchgeführten Operationen, wie beispielsweise Permutationen oder Substitutionen, durch Operationen ergänzt, die mit dem eigentlichen Verschlüsselungsalgorithmus im Hinblick auf das Verschlüsselungsergebnis im Grunde nichts zu tun haben, aber seinen zeitlichen Ablauf und damit die sich jeweils an der Komponente in zeitlicher Abfolge einstellenden physikalischen Verhältnisse, wie Stromverbrauch, Abstrahlung elektrischer Felder und dgl., beeinflussen. Einem potentiellen Angreifer ist es damit kaum noch möglich, die Vielzahl zur Analyse benötigter Messungen reproduzierbar durchzuführen oder mit bestimmten Abarbeitungsphasen des Algorithmus eindeutig korrespondierende physikalische Gegebenheiten meßtechnisch zu erfassen.
Erreicht werden kann die Variation des zeitlichen Ablaufs auf unterschiedliche Weise. Die zusätzlich ausgeführten Operationen können, auch soweit es sich dabei nicht um NOP's handelt, völlig losgelöst vom Verschlüsselungsalgorithmus sein, indem zum Beispiel Rechenoperationen ausgeführt werden, die zum Fortschritt des Verschlüsselungsvorgangs nichts beitragen. So können parallel zum Verschlüsselungsalgorithmus oder zwischen einzelnen Teilschritten mathematische Operationen durchgeführt werden, deren Ergebnisse aber unbeachtet bleiben, also weder weiterverarbeitet noch zwischengespeichert werden.
Die Ergebnisse zusätzlich eingefügter Operationen können aber auch, beispielsweise im Zusammenhang mit der Realisierung eines Zufallszahlengenerators, zur Festlegung von Art oder Reihenfolge anderer nicht zum eigentlichen Algorithmus gehörender Operationen oder zur Bestimmung der Reihenfolge innerhalb des Algorithmus auszuführender Teilschritte dienen. In jedem Falle ist es erfindungswesentlich, daß der Algorithmus selbst im Grunde unverändert bleibt, also bei gleichem Klartext das gleiche Verschlüsselungsergebnis liefert, wie ohne den Einsatz des erfindungsgemäßen Verfahrens.

Sofern der die Verschlüsselung vollziehende Teil des kryptographischen Systems über eine eigene Zeitbasis bzw. einen eigenen Systemtakt verfügt, ist es möglich, unter Nutzung dieser Basis echte Zufallszahlen abzuleiten. Bei anderen Systemen, wie der absoluten Mehrzahl der Chipkartensysteme, verfügt jedoch die die Verschlüsselung durchführende Komponente (also beispielsweise die Chipkarte) nicht über eine eigene Zeitbasis. Hier ist die Beeinflussung des zeitlichen Ablaufs des Verschlüsselungsvorgangs aber zumindest pseudo-zufallsgesteuert möglich. Der Aufbau und die Implementierung hierfür verwendeter Zufallsgeneratoren sind dem Fachmann, beispielsweise einem Informatiker, bestens bekannt.

Grundsätzlich geht die Erfindung von der Überlegung aus, mit Hilfe der zusätzlich ausgeführten Operationen den zeitlichen Ablauf des Algorithmus von einem Verschlüsselungsvorgang zum nächsten zu variieren, den zeitlichen Ablauf gleichartiger sich im Algorithmus wiederholender Teilschritte jeweils zu verändern oder Teilschritte, die ohne Einfluß auf das Ergebnis vertauschbar sind, jeweils in unterschiedlicher Reihenfolge abzuarbeiten. Soweit es sich bei dem zu implementierenden Algorithmus um einen in mehreren logisch gleichartigen Runden ablaufenden Algorithmus handelt, ist es daher auch im Sinne der Erfindung, diesen so zu implementieren, daß die zusätzlich ausgeführten Operationen den zeitlichen Ablauf des Algorithmus von Runde zu Runde variieren.
Prinzipiell kommt es im Hinblick auf das Hinzufügen von Operationen, welche zumindest Zwischenergebnisse des Algorithmus beeinflussen, nur darauf an, daß die Wirkung dieser Operationen im Verlauf der weiteren Abarbeitung des Algorithmus in bezug auf das Endergebnis in irgendeiner Weise durch weitere zusätzliche Operationen wieder kompensiert wird. Letztlich ist es dabei unerheblich ob eine solche Operation unmittelbar durch die darauffolgende Operation in ihrer Wirkung kompensiert oder erst im Zuge der Abarbeitung später folgender Teilschritte des Algorithmus durch eine oder mehrere andere Operationen im Hinblick auf das Endergebnis neutralisiert wird. Eine einfache Ausgestaltungsmöglichkeit des erfindungsgemäßen Verfahrens besteht jedoch darin, mit dem Algorithmus Funktionen zu implementieren, durch welche zu unterschiedlichen Zeitpunkten mathematische Operationen auf Zwischenergebnisse des Verschlüsselungsalgorithmus angewandt werden, diese Operationen aber jeweils durch Anwendung ihrer Umkehrfunktion auf das entstehende Ergebnis quasi unmittelbar wieder neutralisiert werden. Besonders einfach ist dies beispielsweise durch die Implementierung zusätzlicher XOR-Operationen zu realisieren. Diese werden auf Zwischenergebnisse des Algorithmus zu unterschiedlichen Zeitpunkten und in jeweils unterschiedlicher Anzahl angewandt, wobei jeweils eine geradzahlige Anzahl dieser XOR-Operationen unmittelbar aufeinanderfolgend ausgeführt wird. Bekannterweise führt die doppelte XOR-Verknüpfung einer Bitfolge mit einem Operanden wieder auf deren Ausgangswert zurück. Der Algorithmus wird so in Hinblick auf das Ergebnis nicht beeinflußt, wohl aber in bezug auf seinen zeitlichen Ablauf.
Eine andere konkrete Ausgestaltungsmöglichkeit besteht darin durch die Implementierung entsprechender Funktionen zu bewirken, daß beim Ablauf des Algorithmus durchgeführte, voneinander unabhängige Teiloperationen jeweils in unterschiedlicher zeitlicher Reihenfolge abgearbeitet werden, wobei die zeitliche Reihenfolge jeweils durch die Ergebnisse zusätzlich ausgeführter Operationen festgelegt wird.
Bei Implementierungen des DES-Algorithmus oder seiner Varianten kann, der letzten Überlegung folgend, die beim Ablauf des Algorithmus erfolgende XOR-Verknüpfung der zu verschlüsselnden Daten mit dem jeweiligen Rundenschlüssel bezogen auf die Bytes dieser Daten und des Rundenschlüssels in jeweils unterschiedlicher zeitlicher Reihenfolge erfolgen. Dabei wird die zeitliche Reihenfolge wiederum durch die Ergebnisse der infolge der Implementierung zusätzlich ausgeführten Operationen festgelegt. Besonders vorteilhaft läßt sich das erfindungsgemäße Verfahren beim DES insbesondere auch im Hinblick auf die in den S-Boxen erfolgende Substitution des aus der XOR-Verknüpfung mit dem Rundenschlüssel resultierenden Ergebnisses umsetzen, indem die zeitliche Reihenfolge der Anwendung der S-Boxen auf der Grundlage der Ergebnisse ausschließlich zur Ermittlung dieser Reihenfolge ausgeführter Operationen festgelegt wird.

Selbstverständlich ist auch eine Kombination der vorstehend dargestellten Ausgestaltungsmöglichkeiten des Verfahrens ohne weiteres denkbar. Entscheidend ist das Beibehalten der grundsätzlichen Verfahrensweise, den Algorithmus in seinem zeitlichen Ablauf so zu variieren, daß der Algorithmus für sich genommen und bezogen auf sein Ergebnis reproduzierbar - also bei Anwendung des gleichen Schlüssels auf den gleichen Klartext einen gleichen Chiffretext liefert - jedoch im Hinblick auf seinen zeitlichen Ablauf und damit auf die zeitliche Erfaßbarkeit am System meßbarer physikalischer Parameter nicht wiederholbar ist. Als sehr wesentlich ist es dabei anzusehen, daß eine Komponente mit einem in der beschriebenen Weise implementierten Algorithmus zu bestehenden Systemen kompatibel bleibt.

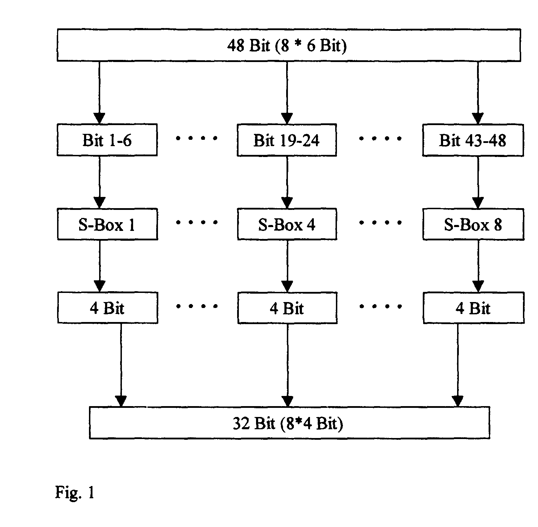

Nachfolgend soll eine Ausgestaltung des Verfahrens in ihrer Anwendung auf eine Implementierung des DES-Algorithmus in der Art eines Ausführungsbeispiels näher erläutert werden, ohne jedoch den DES-Algorithmus als solches im Detail zu erläutern. Bekannterweise arbeitet der DES mit einem ursprünglich 64 Bit langen Schlüssel, welcher aufgrund dessen, daß es sich bei 8 der Bits um Paritätsbits handelt, auf 56 effektive Bit reduziert wird. In jeder der 16 Runden des DES wird aus diesem Schlüssel wiederum durch eine sogenannte Kompressionspermutation ein 48 Bit langer Teilschlüssel generiert. Der zu verschlüsselnde 64 Bit lange Klartext wird zur Verschlüsselung in jeder Runde in zwei Teilblöcke von jeweils 32 Bit Länge zerlegt. Anschließend werden auf den rechten, also quasi niederwertigeren Teilblock Substitutions- und Permutationsoperationen unter Einbeziehung des 48 Bit langen Teilschlüssels angewendet. Zur Durchführung einer dabei erfolgenden XOR-Verknüpfung des Teilblocks mit dem Teilschlüssel wird der Teilblock im Zuge des Ablaufs des Algorithmus in vorbestimmter Weise auf 48 Bit erweitert bzw. expandiert. Um aber die Länge des in mehreren Runden zu behandelnden Datenblocks insgesamt nicht zu verändern, wird das ebenfalls 48 Bit lange Ergebnis (Teilergebnis des Algorithmus) der XOR-Verknüpfung anschließend im Zuge der Anwendung der sogenannten S-Boxen wieder komprimiert. Dies geschieht durch die Zerlegung des 48 Bit langen Blocks in 8 Teilblöcke mit jeweils 6 Bit, aus denen dann durch die Anwendung der S-Boxen Teilblöcke von jeweils nur noch 4 Bit Länge entstehen. Dies wird durch die Abbildung der Fig. 1 schematisch verdeutlicht. Das hieraus resultierende Ergebnis - ein wiederum 32 Bit langer Block - ist völlig unabhängig davon, in welcher zeitlichen Reihenfolge die S-Boxen auf den eingangsseitig 48 Bit langen Block angewendet werden, da jede der 8 S-Boxen in ihrer Anwendung einem 6 Bit langen Teilabschnitt dieses Blocks fest zugeordnet ist. Durch das Hinzufügen von quasi nebenher ablaufenden Operationen kann daher in Abhängigkeit von deren Ergebnis die Reihenfolge der Anwendung der S-Boxen in jeder Runde oder zumindest für jeden sich auf einen 64 Bit lagen Klartext beziehenden Verschlüsselungsvorgang variabel gestaltet werden. Die hinzugefügten Operationen können dabei beispielsweise unter Einbeziehung einer Zeitbasis des Systems einen Zufallszahlengenerator bilden und somit die Reihenfolge zufällig bestimmen.
Der nach der Anwendung der die S-Boxen entstandene 32 Bit lange Teilblock wird nach einer anschließenden Permutation (Vertauschung der Reihenfolge seiner Bits nach einem vorgegebenen Schema) unter Vertauschung der Reihenfolge der Teilblöcke (höherwertiger Teilblock wird zum niederwertigen und umgekehrt) wieder mit dem anderen Teilblock als Eingangsgröße für die nächste DES-Runde zusammengeführt.
Ebenso wäre es jedoch auch denkbar, die S-Boxen jeweils in grundsätzlich gleicher Reihenfolge anzuwenden, aber die Dauer der durch ihre Anwendung erfolgenden Berechnungsvorgänge durch Hinzufügen unterschiedlich vieler, aber stets in geradzahliger Anzahl aufeinanderfolgender XOR-Operationen zu variieren.

## Patentansprüche

1. Verfahren zur Implementierung kryptographischer Algorithmen, mit welchem die Sicherheit einer die Verschlüsselung auf elektronischem oder opto-elektronischem Wege durchführenden Komponente eines kryptographischen Systems gegenüber einem Angriff erhöht wird, bei dem in der Art einer Differential Power Analysis (DPA) während der Durchführung des Algorithmus an der Komponente physikalische Parameter erfaßt und diese Parameter zusammen mit kryptoanalytischen Ansätzen zur Ermittlung der in dem Algorithmus verwendeten Schlüssel genutzt werden, dadurch gekennzeichnet, daß mit dem Algorithmus Funktionen implementiert werden, welche beim Ablauf des in dieser Weise implementierten Algorithmus die Durchführung zusätzlicher Operationen bewirken, durch die sich der zeitliche Ablauf des Algorithmus jeweils zufalls- oder pseudo-zufallsgesteuert verändert, das Verschlüsselungsergebnis aber nicht beeinflußt wird, indem es sich bei den zusätzlichen Operationen um Operationen ohne Ergebnis handelt oder indem aus der Durchführung zusätzlicher mathematischer Operationen resultierende Ergebnisse nicht weiterverarbeitet werden, sich im Hinblick auf das Verschlüsselungsergebnis aufheben oder nur die Basis zur Festlegung der Anzahl und/oder Reihenfolge anderer Operationen oder der zeitlichen Reihenfolge von ohne Beeinflussung des Verschlüsselungsergebnisses vertauschbaren Teilschritten des Algorithmus bilden.

2. Verfahren nach Anspruch 1, dadurch gekennzeichnet, daß die durch die Implementierung der Funktionen durchgeführten zusätzlichen Operationen bei Algorithmen, welche in mehreren logisch gleichartigen Runden ablaufenden, den zeitlichen Ablauf von Runde zu Runde variieren.

3. Verfahren nach Anspruch 1 oder 2, dadurch gekennzeichnet, daß mit dem Algorithmus Funktionen implementiert werden, durch welche zu unterschiedlichen Zeitpunkten auf beim Ablauf des Algorithmus entstehende Zwischenergebnisse erste mathematische Operationen und auf das hieraus entstehende Ergebnis zweite, die ersten Operationen eindeutig umkehrende mathematische Operationen angewandt werden.

4. Verfahren nach Anspruch 3, dadurch gekennzeichnet, daß mit dem Algorithmus Funktionen implementiert werden, durch die beim Ablauf des Algorithmus zusätzliche XOR-Operationen auf Zwischenergebnisse des Algorithmus zu unterschiedlichen Zeitpunkten und in jeweils unterschiedlicher Anzahl angewandt werden, wobei jeweils eine geradzahlige Anzahl dieser XOR-Operationen unmittelbar aufeinanderfolgend ausgeführt wird.

5. Verfahren nach einem der Ansprüche 1 bis 4, dadurch gekennzeichnet, daß mit dem Algorithmus Funktionen implementiert werden, durch welche bei seinem Ablauf erfolgende, voneinander unabhängige Teiloperationen jeweils in unterschiedlicher zeitlicher Reihenfolge durchgeführt werden, wobei die zeitliche Reihenfolge jeweils durch die Ergebnisse der zusätzlich ausgeführten Operationen festgelegt wird.

6. Verfahren nach einem der Ansprüche 1 bis 5, dadurch gekennzeichnet, daß bei Implementierungen des DES-Algorithmus oder seiner Varianten die beim Ablauf des Algorithmus erfolgende XOR-Verknüpfüng der zu verschlüsselnden Daten mit dem jeweiligen Rundenschlüssel bezogen auf die Bytes dieser Daten und des Rundenschlüssels in jeweils unterschiedlicher zeitlicher Reihenfolge erfolgt, wobei die zeitliche Reihenfolge jeweils durch die Ergebnisse der zusätzlich ausgeführten Operationen festgelegt wird.

7. Verfahren nach einem der Ansprüche 1 bis 6, dadurch gekennzeichnet, daß bei Implementierungen des DES-Algorithmus oder seiner Varianten die beim Ablauf des Algorithmus in den S-Boxen erfolgende Substitution des aus der XOR-Verknüpfung mit dem Rundenschlüssel resultierenden Ergebnisses jeweils in unterschiedlicher zeitlicher Reihenfolge erfolgt, wobei die zeitliche Reihenfolge der Anwendung der S-Boxen jeweils durch die Ergebnisse der zusätzlich ausgeführten Operationen festgelegt wird.
